# FASCICULE DE BREVET EUROPEEN

(11) **EP 1 299 674 B1**
(45) Date de publication et mention de la délivrance du brevet: **19.04.2006**
(21) Numéro de dépôt: 01954062.4
(22) Date de dépôt: 06.07.2001
(51) Int. Cl.: F21V 29/00

(54) **TETE OPTIQUE DE VISUALISATION A CRISTAUX LIQUIDES**
FLÜSSIGKRISTALL-ANZEIGEKOPF
LIQUID CRYSTAL DISPLAY OPTICAL HEAD

(30) Priorité: 11.07.2000 FR 0009051
(43) Date de publication de la demande: 09.04.2003
(73) Titulaire: Thales, 75008 Paris (FR)
(72) Inventeur: GUIRAGOUSSIAN, Nicolas, Thales Intellectual Pty., F-94117 Arcueil Cedex (FR); MEYER, Guy, Thales Intellectual Property, F-94117 Arcueil Cedex (FR)
(74) Mandataire: Esselin, Sophie
(86) Numéro de dépôt international: PCT/FR2001/002190
(87) Numéro de publication internationale: WO 2002/004859

(56) Documents cités:
- EP-A- 0 455 886
- US-A- 4 985 815
- US-A- 5 612 593
- US-A- 5 726 722
- US-A- 5 791 770
- PATENT ABSTRACTS OF JAPAN vol. 1995, no. 11, 26 décembre 1995 (1995-12-26) & JP 07 219069 A (CANON INC), 18 août 1995 (1995-08-18)
- PATENT ABSTRACTS OF JAPAN vol. 018, no. 557 (P-1817), 24 octobre 1994 (1994-10-24) & JP 06 202103 A (SONY CORP), 22 juillet 1994 (1994-07-22)

## Description

L'invention conceme le domaine des têtes optiques de visualisation à cristaux liquides. Les têtes optiques de visualisation à cristaux liquides, avec les bacs à cartes électroniques qui leur sont associés, sont préférentiellement utilisées dans des planches de bord d'aéronef mais peuvent également être utilisées dans d'autres types de dispositifs. La tête de visualisation à cristaux liquides est alors la partie en regard du pilote, c'est-à-dire la partie que le pilote voit. La tête de visualisation comporte généralement deux parties principales, l'ensemble matrice cristal liquide équipé et la boîte à lumière. L'ensemble matrice cristal liquide équipé comprend au moins un écran à cristaux liquides sur lequel sont affichées des informations que le pilote peut voir ou lire. La boîte à lumière est la source lumineuse comprenant une ou plusieurs sources lumineuses élémentaires dont la fonction est d'éclairer l'ensemble matrice cristal liquide équipé.

Dans une tête optique de visualisation à cristaux liquides, qui pourra dans la suite du texte être plus simplement appelée tête optique de visualisation ou même tête optique, la transmission lumineuse de l'ensemble matrice cristal liquide équipé est faible, typiquement de l'ordre de quelques pour-cent. Par conséquent, pour assurer une bonne luminosité à l'écran vu par le pilote, c'est-à-dire pour garantir au pilote un bon confort visuel, la boîte à lumière émet et par conséquent dissipe une énergie importante. Or, cette énergie thermiquement dissipée au niveau des sources lumineuses élémentaires doit être évacuée à l'extérieur du boîtier de la tête optique de visualisation.

Selon un art antérieur connu, la tête optique de visualisation comporte un radiateur de dissipation thermique situé au niveau des sources lumineuses élémentaires qui sont généralement des lampes. Au radiateur, du côté des lampes, est associée une partie crénelée en plastique dans laquelle sont maintenues les lampes. Le radiateur comporte, du côté opposé aux lampes, des ailettes de ventilation en métal. La structure du radiateur est parallélépipédique et le radiateur est « en l'air », c'est-à-dire que le rattachement du radiateur à la structure de la tête optique passe par l'intermédiaire de plusieurs organes de liaison mécanique tels que des colonnettes, des vis, etc..., le radiateur restant à l'intérieur du boîtier de la tête optique en étant donc indirectement rattaché à ce boîtier. L'énergie thermiquement dissipée au niveau des lampes, ou plus précisément une bonne partie de cette énergie, est évacuée par le radiateur, et plus précisément par les ailettes du radiateur par convection forcée. Cette convection forcée est assurée par une ventilation forcée. La ventilation forcée est assurée soit par un ventilateur attaché à la visualisation à cristaux liquides, soit par un raccordement au réseau fluidique de bord de l'aéronef.

Le document JP 06 202 103 A, qui est considéré comme l'état de la technique le plus proche, décrit une tête optique selon le préambule de la revendication indépendante.

Le problème que vise à résoudre l'invention est celui d'une diminution voire d'une suppression de la ventilation forcée au niveau de la tête optique de visualisation, ce qui pourra permettre au moins de diminuer, voire de supprimer la ventilation forcée dédiée à la visualisation à cristaux liquides.

L'invention propose une solution basée sur l'amélioration de la conduction thermique au niveau du radiateur de dissipation thermique, permettant la suppression de la ventilation forcée dédiée à la tête optique de visualisation. La conduction thermique au niveau du radiateur est suffisamment améliorée pour que la présence de « fusibles thermiques » dans la tête optique de visualisation, comme un polariseur par exemple, ne perturbe pas le fonctionnement de la tête optique de visualisation comme pourrait le faire un « un fusible thermique ayant sauté ».

Selon l'invention, il est prévu une tête optique de visualisation à cristaux liquides comportant un boîtier dans lequel se trouvent, une ou plusieurs lampes, un ou plusieurs cabochons entourant les lampes, au moins un radiateur de dissipation thermique, le radiateur étant une pièce monobloc en matériau thermiquement conducteur et reliant directement le ou les cabochons à l'extérieur du boîtier, caractérisée en ce que la tête optique peut être fixée sur une planche de bord par l'intermédiaire dudit radiateur.

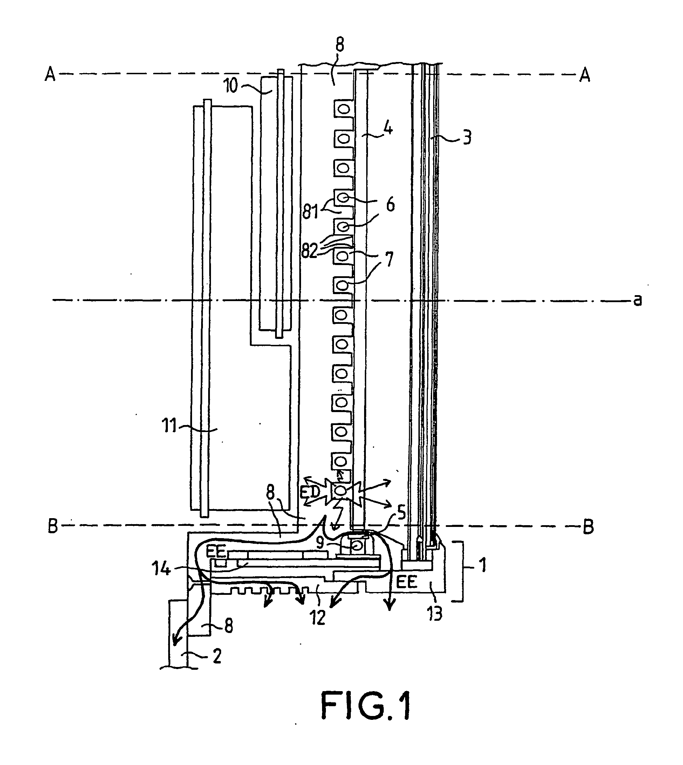

L'invention sera mieux comprise et d'autres particularités et avantages apparaîtront à l'aide de la description ci-après et des dessins joints, donnés à titre d'exemples, où la figure 1 représente schématiquement une vue partielle de profil d'un mode de réalisation préférentiel de l'intérieur d'une tête optique de visualisation à cristaux liquides selon l'invention.

Dans une tête optique de visualisation, trois modes d'échange thermique existent afin de permettre l'évacuation de l'énergie thermiquement dissipée au niveau des lampes. Ces trois modes d'échange thermique sont respectivement le rayonnement, la convection et la conduction. Dans une tête optique de visualisation selon l'art antérieur connu déjà décrit, la convection est une convection forcée assurée par une ventilation forcée ; c'est cette convection forcée qui assure alors la majorité de l'évacuation de l'énergie thermiquement dissipée au niveau des lampes. Dans une tête optique de visualisation selon l'invention, la convection forcée n'existe plus puisque la ventilation forcée a été supprimée ; la seule forme de convection qui subsiste est la convection naturelle moins efficace que la convection forcée. Pour compenser la suppression de la convection forcée, plusieurs solutions sont possibles, parmi lesquelles, augmenter la résistance à la température des éléments de la tête optique de visualisation ou bien améliorer l'un des modes d'échange thermique précités afin de compenser la suppression de la convection forcée. Le rayonnement et/ou la convection naturelle et/ou la conduction peuvent alors être améliorés. Dans la tête optique de visualisation selon l'invention, c'est essentiellement la conduction qui est améliorée. La conduction thermique est améliorée par une modification du radiateur de dissipation thermique. Le radiateur modifié est le radiateur situé au voisinage des lampes et chargé d'évacuer l'énergie thermiquement dissipée au niveau des lampes ; la tête optique peut par ailleurs comporter d'autres radiateurs annexes de dissipation thermique. Pour le radiateur modifié, ce sont son matériau et/ou sa structure qui peuvent alors être modifiés. Dans la tête optique de visualisation selon l'invention, la structure du radiateur a été modifiée ; en effet, au lieu d'être associé à un ratelier en plastique comme dans une tête optique selon l'art antérieur, le radiateur dans une tête optique selon l'invention, est une pièce faite en un seul type de matériau thermiquement conducteur, de préférence en métal, afin d'améliorer la conductivité thermique du radiateur, le radiateur incluant le ratelier qui maintient les lampes. Le caractère monobloc de la structure du radiateur dans la tête optique selon l'invention, le radiateur allant des cabochons de lampe jusqu'à l'extérieur du boîtier et étant destiné à être en contact avec la planche de bord de l'aéronef ou d'un autre dispositif une fois la tête optique montée, est particulièrement importante pour l'amélioration de l'évacuation de l'énergie thermiquement dissipée au niveau des lampes vers l'extérieur du boîtier de la tête optique et vers la planche de bord à laquelle la tête optique est reliée une fois que la tête optique est montée dans l'aéronef ou dans un autre dispositif. L'énergie thermiquement dissipée au niveau des lampes est évacuée dans le radiateur, soit directement pour la partie libre des lampes, soit après être passée par l'intermédiaire des cabochons pour la partie des lampes qui est entourée par les cabochons. Depuis la partie centrale libre des lampes ou depuis les cabochons entourant les parties extrémales des lampes, jusqu'à la planche de bord, le radiateur est monobloc, réduisant ainsi au maximum le nombre d'interfaces thermiques sur le chemin d'évacuation de l'énergie thermiquement dissipée au niveau des lampes vers l'extérieur du boîtier de la tête optique et vers la planche de bord.

La figure 1 représente schématiquement une vue partielle de profil d'un mode de réalisation préférentiel de l'intérieur d'une tête optique de visualisation à cristaux liquides selon l'invention. La tête optique est représentée montée sur la planche de bord d'un dispositif qui est de préférence un aéronef. La tête optique représentée sur la figure 1 est coupée par trois axes, un axe a en traits mixtes et deux axes en traits pointillés, respectivement l'axe AA et l'axe BB. La partie de la tête optique située au-dessus de l'axe AA n'est pas représentée car c'est le symétrique par rapport à l'axe a de la partie de la tête optique située au-dessous de l'axe BB. Un repère orthonormé défini par les axes X, Y, Z est représenté sur la figure 1, le plan de l'écran de l'ensemble matrice cristal liquide équipé étant parallèle au plan YZ. Les axes a, AA, BB sont parallèles à l'axe X.

La tête optique comporte un boîtier 1. Le boîtier 1 comporte plusieurs parties, parmi lesquelles sont représentées une pièce latérale 12 du boîtier 1 et une pièce angulaire 13 du boîtier 1. D'autres pièces de boîtier, non nécessaires à la compréhension de l'invention, ne sont pas représentées et/ou pas référencées. La tête optique est fixée sur une planche de bord 2 par des moyens de fixation non représentés sur la figure 1. La tête optique est représentée montée sur la planche de bord 2, mais la planche de bord 2 n'appartient pas à la tête optique. La planche de bord 2 est par exemple en métal ou en composite thermiquement et électriquement conducteur. La tête optique est fixée sur la planche de bord 2 par l'intermédiaire d'un radiateur 8 de dissipation thermique. Des lampes 6 en verre éclairent un ensemble matrice cristal liquide équipé 3. Le pilote regardant l'écran de l'ensemble matrice cristal liquide équipé 3 est situé à droite de la figure 1, mais il n'est pas représenté sur la figure 1. Derrière les lampes 6 est situé le radiateur 8 de dissipation thermique. Le radiateur 8 est en métal. Le radiateur 8 présente une certaine profondeur suivant l'axe Z. Dans ses parties extrémales dans le sens de la profondeur suivant l'axe Z, comme sur la figure 1, le radiateur 8 présente des créneaux 81 dans lesquels sont disposées les lampes 6. Dans la partie centrale du radiateur 8 dans le sens de la profondeur suivant l'axe Z, partie centrale qui est non visible sur la figure 1, la face du radiateur 8 côté lampes est plane et les lampes 6 en forme de tubes ne sont pas en contact avec le radiateur 8. L'ensemble des lampes 6 en formes de tubes peut être remplacé par une lampe unique en forme de serpentin. Au niveau des parties extrémales du radiateur 8, les lampes 6 sont entourées de cabochons 7 afin d'éviter le contact direct entre le verre des lampes 6 et le métal du radiateur 8, contact qui entraînerait un risque de cassure du verre lorsque la tête optique est soumise à des vibrations lors du vol de l'aéronef. Les cabochons 7 sont situés dans les créneaux 81. La hauteur des cabochons vaut par exemple entre 8mm et 10mm dans le sens de la profondeur suivant l'axe Z. L'ensemble des créneaux 81 constitue le râtelier dans lequel sont disposées les lampes 6. Le radiateur 8 est une pièce monobloc, depuis les créneaux 81 situés au contact des cabochons 7 jusqu'à la partie du radiateur 8 qui est fixée sur la planche de bord 2. Les parties angulaires 82 des créneaux 81 présentent des congés circulaires. Les lampes 6 émettent de l'énergie lumineuse. L'énergie lumineuse émise est représentée par des flèches brisées. Une partie importante de cette énergie lumineuse émise est dissipée thermiquement, c'est-à-dire sous forme de chaleur, dans le radiateur 8, cette partie de l'énergie étant appelée énergie thermiquement dissipée ED. Une partie de l'énergie thermiquement dissipée ED est évacuée par l'intermédiaire du radiateur 8 à l'extérieur du boîtier 1, c'est-à-dire soit jusqu'à la planche de bord 2 soit jusqu'aux surfaces extérieures des pièces latérales 12 et angulaires 13, c'est l'énergie évacuée EE qui est représentée par des flèches en traits pleins. L'énergie évacuée jusqu'aux surfaces extérieures des pièces latérales 12 et angulaires 13 du boîtier 1 continue ensuite d'être évacuée par convection naturelle. L'énergie évacuée jusqu'à la planche de bord 2 continue ensuite d'être évacuée soit par conduction dans la planche de bord 2 soit par convection naturelle. Les lampes 6 sont maintenues dans le râtelier du radiateur 8 par une réglette 4. Les lampes 6 qui sont puissantes fonctionnent de jour, tandis que de nuit, elles sont éteintes ; ce sont des lampes de nuit 9 moins nombreuses et moins puissantes qui fonctionnent la nuit. Devant les lampes de nuit 9 sont placés des filtres infrarouges 5. La forme du radiateur 8 est une forme ayant un profil en U avec des rebords vers l'extérieur sortant du boîtier 1 et venant au contact de la planche de bord 2. Une première carte électronique 11 de pilotage d'allumage et de coupure des lampes, ayant une forme ayant un profil de préférence en L mais qui pourrait également être en I, et une deuxième carte électronique 10 de pilotage de l'ensemble matrice cristal liquide équipé 3, ayant une forme ayant un profil en 1 sont disposés dans le creux du U, de manière à présenter un encombrement minimum. Le L a ses branches respectivement parallèles aux axes X et Y, tandis que le I est parallèle à l'axe Y. Plusieurs cartes latérales 14 de pilotage de l'ensemble matrice cristal liquide équipé 3 sont disposées parallèlement aux branches du U. Les cartes électronique latérales 14 de pilotage de l'ensemble matrice cristal liquide équipé 3 sont assez peu volumineuses car l'électronique encombrante a été déportée sur la deuxième carte électronique 10 de pilotage de l'ensemble matrice cristal liquide équipé 3, ce qui optimise l'encombrement global de la tête optique.

De manière plus générale et indépendamment de la réalisation préférentielle décrite à la figure 1, la tête optique est destinée à être reliée à la planche de bord 2 et est préférentiellement destinée à être fixée sur la planche de bord 2 par l'intermédiaire du radiateur 8 dont la forme ayant un profil en U avec rebords vers l'extérieur, les rebords étant avantageusement parallèles à la partie centrale du U, permet une bonne conduction thermique vers la planche de bord 2 et supporte bien les contraintes mécaniques.

De préférence, la tête optique ne comporte pas de ventilation forcée. La suppression de la ventilation forcée a l'avantage d'augmenter la fiabilité de la fonction refroidissement dans la tête optique par une diminution importante du risque d'apport de poussières à l'intérieur de la tête optique. La suppression de la ventilation forcée a aussi l'avantage de supprimer le risque de ventiler les lampes 6 en direct, ventilation en direct qui aurait l'inconvénient de faire chuter considérablement la durée de vie des lampes 6. La suppression de la ventilation forcée a également l'avantage de réduire les nuisances sonores dans le voisinage de la tête optique par suppression du flux d'air au niveau de la tête optique et par diminution du flux d'air global au niveau de la visualisation à cristaux liquides si le bac à cartes électroniques associé à la tête optique et contenu dans la visualisation à cristaux liquides nécessite la conservation d'une ventilation forcée qui lui sera alors exclusivement dédiée. La suppression a encore l'avantage de réduire la consommation énergétique de la tête optique et par conséquent de réduire la consommation globale de la visualisation à cristaux liquides. Dans un mode de réalisation préférentiel, comme par exemple celui de la figure 1, le radiateur 8 est structuré et disposé de manière à pouvoir évacuer plus de la moitié de l'énergie dissipée thermiquement par les lampes 6.

La partie centrale de la face du radiateur 8 située du côté des lampes 6 réfléchit avantageusement la lumière des lampes 6. Ainsi, une portion plus grande de l'énergie émise par les lampes 6 peut servir à éclairer l'écran de l'ensemble matrice cristal liquide équipé 3 et peut par conséquent augmenter le rendement énergétique global de la tête optique.

Les parties extrémales de la face du radiateur située du côté des lampes comportent de préférence les créneaux 81 d'un râtelier dans lequel sont disposées les lampes 6, les créneaux 81 étant en contact avec les cabochons 7. A l'aide de la réglette 4, les lampes 6 sont solidement maintenues solidaires du radiateur 8 et donc de la structure de la tête optique. Les créneaux 81 présentent avantageusement des congés au niveau de leurs parties angulaires 82, afin d'éviter la formation d'arcs électriques entre les lampes 6 et le radiateur 8. Les congés sont préférentiellement circulaires et présentent par exemple un diamètre d'environ un millimètre. Les lampes 6 sont de préférence en verre.

Le radiateur 8 a un profil préférentiel en assiette formée d'un U avec des rebords vers l'extérieur situés à l'extrémité libre des branches du U. Les rebords sont de préférence parallèles à la partie centrale du U. Avantageusement, le radiateur 8 ne comporte pas d'ailettes au niveau de la partie centrale du U du côté de l'intérieur du U, ce qui permet de loger des cartes électroniques dans le creux du U diminuant ainsi l'encombrement global de la tête optique. Plus précisément, dans l'intérieur du U, c'est-à-dire dans le creux du U, sont disposées de préférence une première carte électronique 11 de pilotage de l'allumage et de la coupure des lampes 6 et une deuxième carte électronique 10 de pilotage de l'ensemble matrice cristal liquide équipé 3, la première carte 11 ayant un profil en forme de L, le creux du L étant disposé vers l'intérieur du U et l'une des barres du L étant parallèle à la partie centrale du U, la deuxième carte 10 ayant un profil en forme de 1, la deuxième carte 10 étant disposée dans le creux du L et parallèlement à la partie centrale du U. L'épaisseur de la partie centrale du U vaut par exemple de l'ordre de 5mm, alors que dans une tête optique selon l'art antérieur, l'épaisseur du radiateur 8 ne valait qu'environ 2mm auxquels il convenait cependant de rajouter les 15mm à 20mm des ailettes pour obtenir un encombrement total dans cette direction valant sensiblement 20mm, soit nettement supérieur aux 5mm du radiateur 8 selon l'invention : l'espace ainsi dégagé permettant maintenant de loger plusieurs cartes électroniques.

Le matériau du radiateur est de préférence électriquement conducteur en plus d'être thermiquement conducteur, c'est préférentiellement un métal. Ainsi, le radiateur 8 relié à la planche de bord 2 peut servir comme mise à la masse de certaines parties de la tête optique, la planche de bord 2 jouant le rôle de masse. Les cabochons 7 sont réalisés de manière à réaliser l'isolation électrique entre les lampes 6 et le radiateur 8. Le matériau du radiateur est avantageusement de l'aluminium.

Dans une tête optique selon l'art antérieur, le matériau des cabochons était en silicone. Dans une tête optique selon l'invention, le matériau des cabochons est chargé afin d'améliorer la conduction thermique des cabochons. Ainsi, l'évacuation de l'énergie thermiquement dissipée au niveau des extrémités des lampes 6 est plus facilement évacuée vers le radiateur 8 au travers des cabochons 7. Le matériau des cabochons est par exemple du silicone chargé en nitrure de bore ou du silicone chargé en alumine.

## Revendications

1. Tête optique de visualisation à cristaux liquides pour montage sur une planche de bord, la tête optique comportant un boîtier (1) dans lequel se trouvent, une ou plusieurs lampes (6), un ou plusieurs cabochons (7) entourant la ou les lampes (6), au moins un radiateur (8) de dissipation thermique, le radiateur (8) étant une pièce monobloc en matériau thermiquement conducteur et reliant directement le ou les cabochons (7) à l'extérieur du boîtier (1) **caractérisé en ce que** la tête optique peut être fixée sur une planche de bord (2) par l'intermédiaire dudit radiateur (8).

2. Tête optique selon la revendication 1, **caractérisée en ce que** la tête optique ne comporte pas de ventilation forcée.

3. Tête optique selon l'une quelconque des revendications précédentes, **caractérisée en ce que** le radiateur (8) est structuré et disposé de manière à pouvoir évacuer plus de la moitié de l'énergie thermiquement dissipée par les lampes (6).

4. Tête optique selon l'une quelconque des revendications précédentes, **caractérisée en ce que** la partie centrale de la face du radiateur (8) située du côté des lampes (6) réfléchit la lumière des lampes (6).

5. Tête optique selon l'une quelconque des revendications précédentes, **caractérisée en ce que** les parties extrémales de la face du radiateur (8) située du côté des lampes (6) comportent les créneaux (81) d'un râtelier dans lequel sont disposées les lampes (6), les créneaux (81) étant en contact avec les cabochons (7).

6. Tête optique selon la revendication 5, **caractérisée en ce que** les créneaux (81) présentent des congés au niveau de leurs parties angulaires (82).

7. Tête optique selon la revendication 6, **caractérisée en ce que** les congés sont circulaires et présentent un diamètre d'environ un millimètre.

8. Tête optique selon l'une quelconque des revendications précédentes, **caractérisée en ce que** le radiateur (8) a un profil en assiette formée d'un U avec des rebords vers l'extérieur situés à l'extrémité libre des branches du U.

9. Tête optique selon la revendication 8, **caractérisée en ce que** le radiateur (8) ne comporte pas d'ailettes au niveau de la partie centrale du U du côté de l'intérieur du U.

10. Tête optique selon la revendication 9, **caractérisée en ce que** dans l'intérieur du U sont disposées une première carte électronique (11) de pilotage 'de l'allumage et de la coupure des lampes (6) et une deuxième carte électronique (10) de pilotage de l'ensemble matrice cristal liquide équipé (3), la première carte (11) ayant un profil en forme de L, le creux du L étant disposé vers l'intérieur du U et l'une des barres du L étant parallèle à la partie centrale du U, la deuxième carte (10) ayant un profil en forme de 1, la deuxième carte (10) étant disposée dans le creux du L et parallèlement à la partie centrale du U.

11. Tête optique selon l'une quelconque des revendications 8 à 10, **caractérisée en ce que** l'épaisseur de la partie centrale du U vaut de l'ordre de 5mm.

12. Tête optique selon l'une quelconque des revendications précédentes, **caractérisée en ce que** le matériau du radiateur (8) est métallique.

13. Tête optique selon l'une quelconque des revendications précédentes, **caractérisée en ce que** le matériau des cabochons (7) est chargé afin d'améliorer la conduction thermique des cabochons (7).

14. Tête optique selon la revendication 13, **caractérisée en ce que** le matériau des cabochons (7) est du silicone chargé en nitrure de bore ou du silicone chargé en alumine.

## Patentansprüche

1. Optikkopf einer Flüssigkristallanzeige zum Einbau in ein Instrumentenbrett, wobei der Optikkopf ein Gehäuse (1) aufweist, in dem sich eine oder mehrere Lampe(n) (6), eine oder mehrere die Lampe(n) (6) umgebende Abdeckscheiben (7) und mindestens ein Wärme abstrahlender Radiator (8) befinden, wobei der Radiator (8) ein einstückiges Bauteil aus Wärme leitendem Werkstoff ist und die Abdeckscheibe(n) (7) direkt mit der Außenumgebung des Gehäuses (1) verbindet, **dadurch gekennzeichnet, dass** der Optikkopf mit Hilfe des Radiators (8) auf einem Instrumentenbrett (2) befestigt werden kann.

2. Optikkopf nach Anspruch 1, **dadurch gekennzeichnet, dass** der Optikkopf keine Zwangsbelüftung aufweist.

3. Optikkopf nach einem der vorhergehenden Ansprüche, **dadurch gekennzeichnet, dass** der Radiator (8) so aufgebaut und angeordnet ist, dass er mehr als die Hälfte der von den Lampen (6) als Wärme abgestrahlten Energie abführen kann.

4. Optikkopf nach einem der vorhergehenden Ansprüche, **dadurch gekennzeichnet, dass** der zentrale Bereich der Fläche des Radiators (8), die sich auf der Seite der Lampen (6) befindet, das Licht der Lampen (6) reflektiert.

5. Optikkopf nach einem der vorhergehenden Ansprüche, **dadurch gekennzeichnet, dass** die extremalen Bereiche der Fläche des Radiators (8), die sich auf der Seite der Lampen (6) befindet, die Zacken (81) eines Traggestells aufweisen, in dem die Lampen (6) angeordnet sind, wobei die Zacken (81) mit den Abdeckscheiben (7) in Kontakt stehen.

6. Optikkopf nach Anspruch 5, **dadurch gekennzeichnet, dass** die Zacken (81) in Höhe ihrer Winkelbereiche (82) Ausrundungen aufweisen.

7. Optikkopf nach Anspruch 6, **dadurch gekennzeichnet, dass** die Ausrundungen kreisförmig sind und einen Durchmesser von etwa einem Millimeter haben.

8. Optikkopf nach einem der vorhergehenden Ansprüche, **dadurch gekennzeichnet, dass** der Radiator (8) ein tellerförmiges Profil hat, das von einem U mit nach außen weisenden Randleisten geformt ist, die sich am freien Ende der Schenkel des U befinden.

9. Optikkopf nach Anspruch 8, **dadurch gekennzeichnet, dass** der Radiator (8) in Höhe des zentralen Bereichs des U auf der Innenseite des U keine Rippen aufweist.

10. Optikkopf nach Anspruch 9, **dadurch gekennzeichnet, dass** im Inneren des U eine erste Magnetkarte (11) zur Steuerung des Einschaltens und des Ausschaltens der Lampen (6) und eine zweite Magnetkarte (10) zur Steuerung der bestückten Flüssigkristallmatrixeinheit (3) angeordnet sind, wobei die erste Karte (11) ein L-förmiges Profil hat, wobei die Aushöhlung des L zur Innenseite des U hin gerichtet ist und einer der Stege des L parallel zum zentralen Bereich des U liegt, während die zweite Karte (10) ein I-förmiges Profil hat, wobei die zweite Karte (10) in der Aushöhlung des L und parallel zum zentralen Bereich des U angeordnet ist.

11. Optikkopf nach einem der Ansprüche 8 bis 10, **dadurch gekennzeichnet, dass** die Dicke des zentralen Bereichs des U in der Größenordnung von 5 mm liegt.

12. Optikkopf nach einem der vorhergehenden Ansprüche, **dadurch gekennzeichnet, dass** der Werkstoff des Radiators (8) metallisch ist.

13. Optikkopf nach einem der vorhergehenden Ansprüche, **dadurch gekennzeichnet, dass** der Werkstoff der Abdeckscheiben (7) mit einem Zusatz versehen ist, um die Wärmeleitung der Abdeckscheiben (7) zu verbessern.

14. Optikkopf nach Anspruch 13, **dadurch gekennzeichnet, dass** der Werkstoff der Abdeckscheiben (7) ein bornitridhaltiges Silikon oder ein aluminiumoxidhaltiges Silikon ist.

## Claims

1. Liquid-crystal optical display head for mounting onto an instrument panel, the optical head comprising a casing (1) in which there are one or more lamps (6), one or more covers (7) surrounding the lamp or lamps (6) and at least one heat sink (8), the heat sink (8) being made as one piece from a heat conducting material and directly connecting the cover or covers (7) to the outside of the casing (1), **characterized in that** the optical head can be fastened to an instrument panel (2) via said heat sink (8).

2. Optical head according to Claim 1, **characterized in that** the optical head does not have forced ventilation.

3. Optical head according to either of the preceding claims, **characterized in that** the heat sink (8) is structured and placed so as to be able to extract more than half of the energy dissipated as heat by the lamps (6).

4. Optical head according to any one of the preceding claims, **characterized in that** the central part of that face of the heat sink (8) which is next to the lamps (6) reflects the light from the lamps (6).

5. Optical head according to any one of the preceding claims, **characterized in that** the extreme parts of that face of the heat sink (8) which is next to the lamps (6) comprise the crenels (81) of a rack in which the lamps (6) are placed, the crenels (81) being in contact with the covers (7).

6. Optical head according to Claim 5, **characterized in that** the crenels (81) have fillets in their angular parts (82).

7. Optical head according to Claim 6, **characterized in that** the fillets are circular and have a diameter of about one millimetre.

8. Optical head according to any one of the preceding claims, **characterized in that** the heat sink (8) has a dish-shaped profile formed by a U with outward rims located at the free ends of the arms of the U.

9. Optical head according to Claim 8, **characterized in that** the heat sink (8) does not have fins in the central part of the U on the inside of the U.

10. Optical head according to Claim 9, **characterized in that** a first electronic card (11) for switching the lamps (6) on and off and a second electronic card (10) for driving the assembly comprising the liquid crystal matrix (3) are placed inside the U, the first card (11) having an L-shaped profile, the hollow of the L being placed towards the inside of the U and one of the bars of the L being parallel to the central part of the U, the second card (10) having an I-shaped profile, and the second card (10) being placed in the hollow of the L and parallel to the central part of the U.

11. Optical head according to any one of Claims 8 to 10, **characterized in that** the central part of the U has a thickness of about 5 mm.

12. Optical head according to any one of the preceding claims, **characterized in that** the material of the heat sink (8) is metallic.

13. Optical head according to any one of the preceding claims, **characterized in that** the material of the covers (7) contains a filler in order to improve the heat conduction of the covers (7).

14. Optical head according to Claim 13, **characterized in that** the material of the covers (7) is silicone filled with boron nitride or silicone filled with alumina.
